# EUROPEAN PATENT APPLICATION

(11) **EP 3 308 910 A1**
(43) Date of publication of application: **18.04.2018**
(21) Application number: 16807733.7
(22) Date of filing: 02.06.2016
(51) Int. Cl.: B25J 11/00, B25J 5/00, B25J 19/00

(54) **FISH ROBOT**

(30) Priority: 09.06.2015 KR 20150081210
(71) Applicant: Artificial Intelligence Robot Inc., Suncheon-si, Jeollanam-do 58005 (KR)
(72) Inventor: JOO, Young Tae, Gwangyang-si Jeollanam-do 57701 (KR); YU, Ji Gyeong, Yeosu-si Jeollanam-do 59714 (KR); PARK, Lee Su, Yeosu-si Jeollanam-do 59603 (KR); KIM, Jun Suk, Seongnam-si Gyeonggi-do 13623 (KR); SHIN, Sun Im, Suncheon-si Jeollanam-do 57986 (KR)
(74) Representative: Margotti, Herwig Franz
(86) International application number: PCT/KR2016/005825
(87) International publication number: WO 2016/200092

(57) **Abstract**

Disclosed herein is a fish robot. The fish robot characterized in comprising a head unit corresponding to head portion of a fish; a driving unit coupled to the head unit to generate driving force by sinusoidal swimming movement; a waterproof cover coupled to the head unit with elasticity in which the driving unit being inserted to be sealed; and a body unit coupled to the head unit with elasticity corresponding to body portion of the fish in which the waterproof cover being inserted to be supported.

## Description

### TECHNICAL FIELD

The present invention relates to a fish robot, and more specifically, to a fish robot of which fish body joints are not exposed, of which waterproof is optimized, and which can swim smoothly.

### BACKGROUND ART

Generally, fish generates driving force with sinusoidal swimming movement using body and tail, and perform advancing movement. And, a fish having air bladder can submerge or float with buoyance using the air bladder.

Accordingly, underwater robots in the form of fish (hereinafter, fish robot) are under development to be able to perform operation of fish. For example, a fish-type underwater robot to which small control circuit design and waterproof technology was applied has been registered in Korea (Patent No.: 236,479, registered on February 18, 2013).

However, in the conventional underwater robots in the form of fish (hereinafter, fish robot), it has not been designed with considering waterproof, experiment, attachment and detachment and the like according to limitative structure of mechanical design and frame, but has been designed with giving priority to functional aspect. Accordingly, in case that a problem in a first waterproof process of frame of fish robot may break out and interior thereof is flooded, problems such as malfunction of circuit, short of electric power supply, and interior corrosion may occur.

To settle these problems, it is not possible by only miniaturization or modularization of circuit, but an optimized design plan for frame type and waterproof is needed

### DISCLOSURE

### Technical Problem

The present invention is to settle the problems of conventional art, of which an object is to provide a fish robot of which fish body joints are not exposed, of which waterproof is optimized, and which can swim smoothly.

### Technical Solution

According to a preferred embodiment to realize the object of the present invention described above, a fish robot of the present invention may include a head unit corresponding to head portion of a fish; a driving unit coupled to the head unit to generate driving force by sinusoidal swimming movement; a waterproof cover coupled to the head unit with elasticity in which the driving unit being inserted to be sealed; and a body unit coupled to the head unit with elasticity corresponding to body portion of the fish in which the waterproof cover being inserted to be supported.

The fish robot of the present invention may further include a swimming delivery unit connecting the waterproof cover and the body unit so that the sinusoidal swimming movement according to operation of the driving unit being delivered to the body unit.

Here, the swimming delivery unit may either include a delivery rib portion being protruded to be formed on outer circumference face of the waterproof cover, and a delivery groove portion being dent to be formed on inner circumference face of the body unit so that the delivery rib portion is inserted, or include only the delivery rib portion.

Here, the swimming delivery unit may further include at least one of a fixed protrusion portion protruded to be formed on outer circumference face of the delivery rib portion or on inner circumference face of the delivery groove portion, and a fixed groove portion dent to be formed on outer circumference face of the delivery rib portion or on inner circumference face of the delivery groove portion.

Here, the driving unit may include an electric power supply portion provided to the head unit to apply electric power supply; a plurality of drive motor portion rotating rotation axis by the electric power supply portion; a link bracket portion linking the plurality of drive motor portion to be coupled to the head unit in series corresponding to sinusoidal swimming movement; and an air bladder portion adjusting buoyance by the electric power supply portion so that the fish robot is submerged or floated.

Here, the air bladder portion may include a first buoyance adjusting portion provided to upper side of the driving unit corresponding to back portion of the fish, to be provided with a first adjusting portion having smaller specific gravity than that of fluid in which the fish robot is submerged; and a second buoyance adjusting portion provided to lower side of the driving unit corresponding to stomach portion of the fish, to be provided with a second adjusting portion having the same or larger specific gravity than that of fluid in which the fish robot is submerged.

Here, to the waterproof cover, a swimming pleat portion extended and contracted in accordance with sinusoidal swimming movement may be provided.

Here, the body unit may include a hard portion coupled to the head unit to be capable of being attached and detached; and a soft portion extended from the hard portion with elasticity.

### Advantageous effects

According to the fish robot according to the present invention, fish body joints are not exposed, waterproof is optimized, and it can swim smoothly.

And, the present invention can make the sinusoidal swimming movement according to operation of the driving unit be delivered to the body unit stably, and make the sinusoidal swimming movement of the fish robot be exposed outside naturally

And, the present invention can maintain connection state of waterproof cover and body unit when the fish robot performs sinusoidal swimming movement to prevent the delivery rib portion from being separated from the body unit.

And, the present invention can prevent the body unit from being distorted by water pressure when the fish robot performs sinusoidal swimming movement to prevent the waterproof cover or body unit from being broken by the swimming delivery unit.

And, the present invention can perform sinusoidal swimming movement smoothly through the driving unit to facilitate easy submerge and float of the fish robot.

And, the present invention can facilitate simple submergence and floating of the fish robot when the fish robot performs sinusoidal swimming movement, and can facilitate rapid inclination of the fish robot with small energy.

And, the present invention can prevent the waterproof cover from being broken at a folding position thereof when the fish robot performs sinusoidal swimming movement to prevent it from interfering the driving unit.

And, the present invention can stabilize coupling of the head unit and body unit to prevent the body unit from being separated from the head unit when the fish robot performs sinusoidal swimming movement.

And, the present invention can facilitate directing of a variety of fish by replacing the body unit from the head unit to facilitate easy maintenance of the fish robot.

### BRIEF DESCRIPTION OF DRAWINGS

FIG. 1 is a diagram showing a fish robot according to an embodiment of the present invention.
FIG. 2 is an exploded view showing a fish robot according to an embodiment of the present invention.
FIG. 3 is a sub perspective view showing schematically swimming delivery unit of a fish robot according to an embodiment of the present invention.
FIG. 4 is a longitudinal cross-sectional diagram showing schematically coupled status of a fish robot according to an embodiment of the present invention.

### DETAILED DESCRIPTION OF THE PREFERRED EMBODIMENT

Hereinafter, an embodiment of a fish robot according to the present invention will be described with reference to attached drawings. Herein, the present invention may not be limited or restricted by embodiments. And, in description of the present invention, specific descriptions about known function or structure may be omitted for the sake of clarification of gist of the present invention.

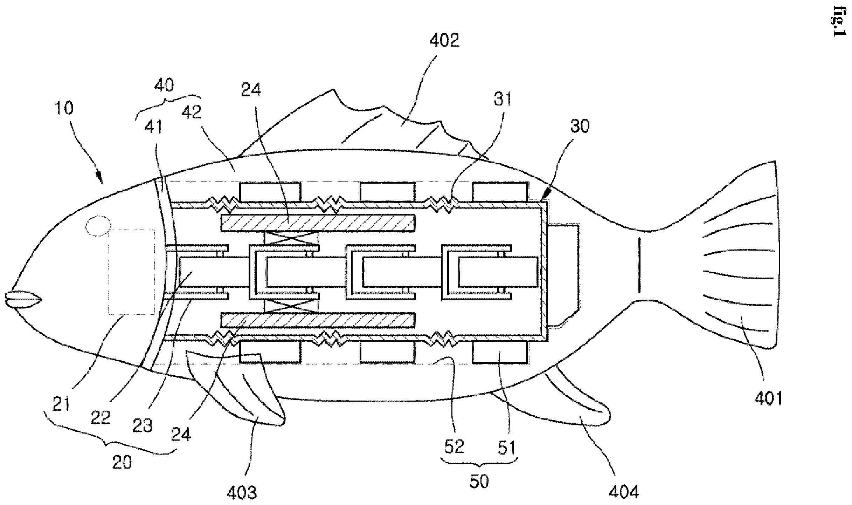

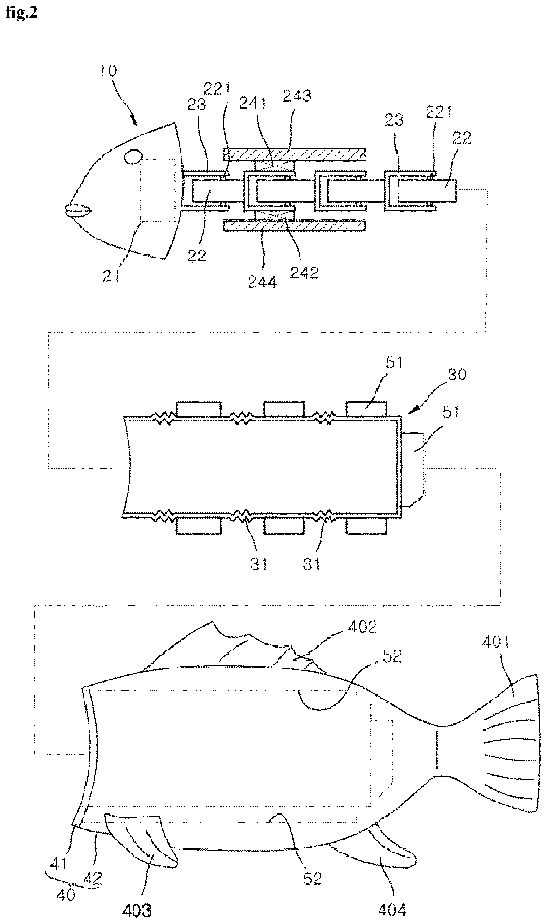

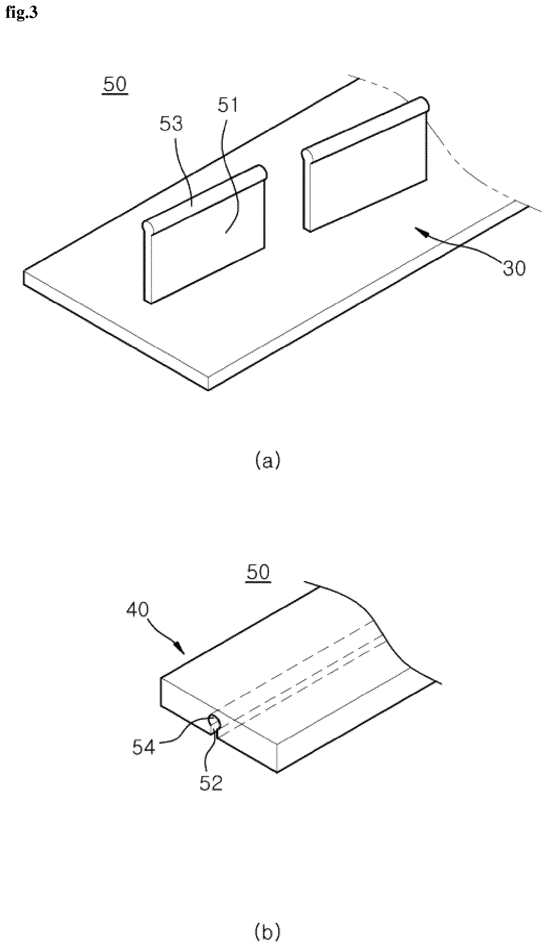

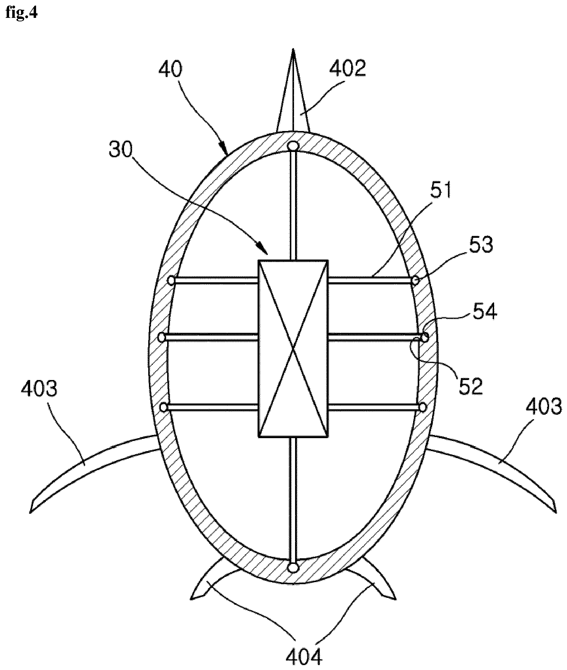

FIG. 1 is a diagram showing a fish robot according to an embodiment of the present invention, FIG. 2 is an exploded view showing a fish robot according to an embodiment of the present invention, FIG. 3 is a sub perspective view showing schematically swimming delivery unit of a fish robot according to an embodiment of the present invention, and FIG. 4 is a longitudinal cross-sectional diagram showing schematically coupled status of a fish robot according to an embodiment of the present invention.

Referring to FIG. 1 to FIG. 4, a fish robot according to an embodiment of the present invention is a robot performing sinusoidal swimming movement with fish shape submerging or floating underwater, which may include a head unit 10, a driving unit 20, a waterproof cover 30, and a body unit 40, and may further include a swimming delivery unit 50.

The head unit 10 corresponds to the head portion of fish. In the head unit 10, eyes, mouth and gills of fish may be expressed.

The driving unit 20 may be coupled to the head unit 10. The driving unit 20 may generate driving force with sinusoidal swimming movement.

The driving unit 20 may include an electric power supply portion 21, a drive motor portion 22, a link bracket portion 23, and an air bladder portion 24.

The electric power supply portion 21 may be provided at the head unit 10 to apply electric power supply. The electric power supply portion 21 either may be provided inside of the head unit 10, or may be provided to be protruded at one side of the head unit 10. The electric power supply portion 21 may apply electric power by coupling of batteries charged with electric power. And, the electric power supply portion 21 may apply electric power according to being charged with outer electric power.

The drive motor portion 22 may be in plurality and be arrayed in longitudinal direction of the fish robot. The plurality of drive motor portions 22 may rotate each of rotation axes 221 by the electric power supply portion 21. In the plurality of drive motor portion 22, the rotation axis 221 may be arrayed practically parallel to each other.

The link bracket portion 23 may link and couple the plurality of drive motor portion 22 to the head unit 10 in series in accordance to sinusoidal swimming movement. And then, between the head unit 10 and the drive motor portion 22, in a state in which the link bracket portion 23 is coupled to the head unit 10, the rotation axis 221 may be coupled. And, between the plurality of drive motor portions 22, in a state in which the link bracket portion 23 is coupled to one side of the plurality of drive motor portions 22, the rotation axis 221 coupled to the other side of the plurality of drive motor portion 22 may be coupled. Here, the rotation axis 221 either may be coupled to the link bracket portion 23 to be able to rotate, or may be fixed to the link bracket portion 23.

According to this, at one side of the head unit 10 heading from head portion of fish to caudal fin of fish, the drive motor portion 22 may be arrayed in a raw through a medium of the link bracket portion 23.

The air bladder portion 24 may adjust buoyance by the electric power supply portion 21. The air bladder portion 24 make the fish robot be submerged or floated. The air bladder portion 24 may be coupled any one of the head unit 10 and the driving unit 20.

Here, the air bladder portion 24 may be divided into first buoyance adjusting portion 241 and, second buoyance adjusting portion 242.

The first buoyance adjusting portion 241 may be provided at upper side of the driving unit 20 in accordance with back portion of fish. To the first buoyance adjusting portion 241, a first adjusting portion 243 may be provided having smaller specific gravity than that of fluid in which the fish robot is submerged. The first buoyance adjusting portion 241 either may be coupled to the drive motor portion 22 or the link bracket portion 23 or may be coupled to the head unit 10 at upper side of the driving unit.

The second buoyance adjusting portion 242 may be provided at lower side of the driving unit 20 in accordance with stomach portion of fish. To the first buoyance adjusting portion 241, a second adjusting portion 244 may be provided having specific gravity equal to or larger than that of fluid in which the fish robot is submerged. The second buoyance adjusting portion 242 either may be coupled to drive motor portion 22 or the link bracket portion 23 or may be coupled to the head unit 10 at lower side of the driving unit 20.

The waterproof cover 30 may be coupled to the head unit 10 with elasticity. To the waterproof cover 30, the driving unit 20 may be inserted and sealed. The waterproof cover 30 may be supported to the driving unit 20. Here, the air bladder portion 24 may be provided outside of the waterproof cover 30.

Here, to the waterproof cover 30, a swimming pleat portion 31 may be provided in accordance with sinusoidal swimming movement. The swimming pleat portion 31 may be formed in a shape of pleat at folding portion of the waterproof cover 30. The swimming pleat portion 31 may prevent the folding portion of the waterproof cover 30 from being broken when the waterproof cover 30 is folded and unfolded by being folded and unfolded in accordance with swimming movement.

The body unit 40 may be coupled to the head unit 10 with elasticity in accordance with body portion of fish. To the body unit 40, the waterproof cover 30 is inserted and supported. Here, inside the body unit 40, the waterproof cover 30 is separated and arranged, and inside a separate space from the waterproof cover 30 in the body unit 40, a fluid may be charged. By charging fluid in the separate space from the waterproof cover 30 in the body unit 40, not only thickness of the body unit 40 is reduced but also body shape of fish through the body unit 40 can be maintained stably. The fluid charged in the separate space from the waterproof cover 30 in the body unit 40 may be practically the same fluid as that in which the fish robot is submerged.

The body unit 40 may include a hard portion 41, and a soft portion 42.

The hard portion 41 may be coupled to the head unit 10 to be able to be attached and detached. By being coupled to the head unit 10 with strength in accordance with the head unit 10 to be able to be attached and detached, the hard portion 41 may prevent the hard portion 41 from being separated from the head unit 10 while the fish robot is swimming.

The soft portion 42 may be extended from the hard portion 41 with elasticity. By being extended from the hard portion 41 having elasticity in accordance with the waterproof cover 30, having lower elasticity that that of the head unit 10, or having lower elasticity than that of the hard portion 41, the soft portion 42 may facilitate smooth sinusoidal swimming movement of the body unit 40 while the fish robot is swimming.

The swimming delivery unit 50 may connect the waterproof cover 30 and the body unit 40. The swimming delivery unit 50 may make sinusoidal swimming movement according to operation of the driving unit 20 be delivered to the body unit 40.

The swimming delivery unit 50 may include a delivery rib portion 51 protruded and formed on outer circumference face of the waterproof cover 30, and a delivery groove portion 52 dent and formed on inner circumference face of the body unit 40 so that the delivery rib portion 51 is inserted therein. And, into the swimming delivery unit 50, only the delivery rib portion 51 may be included.

And, the swimming delivery unit 50 may further include at least any one of a fixed protrusion portion 53 protruded to be formed on outer circumference face of the delivery rib portion 51 or on inner circumference face of the delivery groove portion 52, and a fixed groove portion 54 dent to be formed on outer circumference face of the delivery rib portion 51 or on inner circumference face of the delivery groove portion 52. Here, in case that both of the fixed protrusion portion 53 and the fixed groove portion 54 are included, the fixed protrusion portion 53 may be inserted to and supported by the fixed groove portion 54.

Here, unexplained numeral 401 is a caudal fin provided to the body unit 40 in accordance with caudal fin of fish, unexplained numeral 402 is a dorsal fin provided to the body unit 40 in accordance with dorsal fin of fish, unexplained numeral 403 is a pectoral fin provided to the body unit 40 or to the head unit 10 in accordance with pectoral fin of fish, and unexplained numeral 404 is a ventral fin provided to the body unit 40 in accordance with ventral fin of fish.

Hereinafter, operation of the fish robot according to an embodiment of the present invention will be described.

When the fish robot is submerged in fluid and the drive motor portion 22 is operated by electric power applied through the electric power supply portion 21, the rotation axis 221 is rotated. With the rotation, by a linked operation of the head unit 10, the driving unit 20, and the link bracket portion 23, the waterproof cover 30 may perform sinusoidal swimming movement, by which the body unit 40 may perform sinusoidal swimming movement. According to above, to the fish robot, driving force may be generated in a submerged state in fluid, by which the fish robot may move forward of the head unit 10.

Here, the air bladder portion 24 may adjust buoyance of the fish robot, by which the fish robot may move up and down in a submerged state in fluid, or may perform upward slant or downward slant.

Here, inside of the body unit 40, fluid may be charged, by which the body unit 40 is prevented from being distorted by pressure of fluid existing outside of the body unit 40 and appearance thereof may be maintained stably.

According to the fish robot described above, fish body joints are not exposed, waterproof is optimized, and smooth swimming is available. And, sinusoidal swimming movement according to operation of the driving unit 20 is delivered to the body unit 40 stably, and sinusoidal swimming movement of the fish robot can be exposed to outside naturally.

And, when the fish robot performs sinusoidal swimming movement, the connection state of the waterproof cover 30 and the body unit 40 can be maintained, and the delivery rib portion 51 is prevented from being separated from the body unit 40. And, when the fish robot performs sinusoidal swimming movement, it is prevented that the body unit 40 is distorted by water pressure, and the waterproof cover 30 or the body unit 40 is prevented from being broken by the swimming delivery unit.

And, by the driving unit 20, sinusoidal swimming movement can be performed smoothly, and submerging and floating of the fish robot can be performed with ease.

And, when the fish robot performs sinusoidal swimming movement, submergence and floating of the fish robot can be simple and easy, and when the fish robot submerges or floats, the fish robot can be rapidly slant with small energy. And, when the fish robot performs sinusoidal swimming movement, the waterproof cover 30 can be prevented from being broken at folding portion thereof, and the waterproof cover 30 can be prevented from being intervened by the driving unit 20 at folding portion thereof.

And, the coupling of the head unit 10 and the body unit 40 is stabilized, and when the fish robot performs sinusoidal swimming movement, the body unit can be prevented from being separated from the head unit 10. And, by replacing the body unit from the head unit 10, a variety fish can be directed, and maintenance of the fish robot can be facilitated with ease.

As described above, though preferred embodiments of the present invention has been described with reference to drawings, the present invention may be modified or changed in variety within a scope without escaping from idea and scope of the present invention written in claims attached below by an ordinary skilled person in the art.

The fish robot according to an embodiment of the present invention can perform sinusoidal swimming movement with submerging or floating with shape of fish underwater.

## Claims

1. A fish robot **characterized in** comprising
a head unit corresponding to head portion of a fish;
a driving unit coupled to the head unit to generate driving force by sinusoidal swimming movement;
a waterproof cover coupled to the head unit with elasticity in which the driving unit being inserted to be sealed; and
a body unit coupled to the head unit with elasticity corresponding to body portion of the fish in which the waterproof cover being inserted to be supported.

2. The fish robot according to claim 1 **characterized in** further comprising
a swimming delivery unit connecting the waterproof cover and the body unit so that the sinusoidal swimming movement according to operation of the driving unit being delivered to the body unit.

3. The fish robot according to claim 2 **characterized in that** the swimming delivery unit
either including a delivery rib portion being protruded to be formed on outer circumference face of the waterproof cover, and a delivery groove portion being dent to be formed on inner circumference face of the body unit so that the delivery rib portion being inserted,
or including only the delivery rib portion.

4. The fish robot according to claim 3 **characterized in that** the swimming delivery unit further comprising at least one of
a fixed protrusion portion being protruded to be formed on outer circumference face of the delivery rib portion or on inner circumference face of the delivery groove portion, and
a fixed groove portion being dent to be formed on outer circumference face of the delivery rib portion or on inner circumference face of the delivery groove portion.

5. The fish robot according to claim 1 to claim 4 **characterized in that** the driving unit comprising
an electric power supply portion being provided to the head unit to apply electric power supply;
a plurality of drive motor portion rotating rotation axis by the electric power supply portion;
a link bracket portion linking the plurality of drive motor portion to be coupled to the head unit in series corresponding to sinusoidal swimming movement; and
an air bladder portion adjusting buoyance by the electric power supply portion so that the fish robot being submerged or floated.

6. The fish robot according to claim 5 **characterized in that** the air bladder portion comprising
a first buoyance adjusting portion being provided to upper side of the driving unit corresponding to back portion of the fish, to be provided with a first adjusting portion having smaller specific gravity than that of fluid in which the fish robot being submerged; and
a second buoyance adjusting portion being provided to lower side of the driving unit corresponding to stomach portion of the fish, to be provided with a second adjusting portion having the same or larger specific gravity than that of fluid in which the fish robot being submerged.

7. The fish robot according to claim 1 to claim 4 **characterized in that**,
to the waterproof cover, a swimming pleat portion extended and contracted in accordance with sinusoidal swimming movement being provided.

8. The fish robot according to claim 1 to claim 4 **characterized in that** the body unit comprising
a hard portion being coupled to the head unit to be capable of being attached and detached; and
a soft portion extended from the hard portion with elasticity.
